# EUROPEAN PATENT SPECIFICATION

(11) **EP 4 344 258 B1**
(45) Date of publication and mention of the grant of the patent: **09.12.2026**
(21) Application number: 22803858.4
(22) Date of filing: 12.05.2022
(51) Int. Cl.: H04W 24/10, H04W 76/27, H04W 76/40

(54) **DATA PROCESSING METHOD AND APPARATUS, AND DEVICE AND STORAGE MEDIUM**
DATENVERARBEITUNGSVERFAHREN UND -VORRICHTUNG SOWIE VORRICHTUNG UND SPEICHERMEDIUM
PROCÉDÉ ET APPAREIL DE TRAITEMENT DE DONNÉES, DISPOSITIF ET SUPPORT DE STOCKAGE

(30) Priority: 21.05.2021 CN 202110560544
(43) Date of publication of application: 27.03.2024
(73) Proprietor: Datang Mobile Communications Equipment Co., Ltd., Beijing 100085 (CN)
(72) Inventor: YAN, Nan, Beijing 100085 (CN); ZHANG, Dajun, Beijing 100085 (CN)
(74) Representative: Studio Torta S.p.A.
(86) International application number: PCT/CN2022/092409
(87) International publication number: WO 2022/242536

(56) References cited:
- EP-A1- 3 860 188
- WO-A1-2020/063588
- WO-A1-2020/207435
- WO-A1-2020/249116
- CN-A- 102 547 840
- CN-A- 103 260 176
- US-A1- 2021 075 710
- US-A1- 2021 409 990
- HUAWEI ET AL: "Discussion on SA5 defined measurements for the immediate MDT", vol. RAN WG2, no. Reno, Nevada, USA; 20191118 - 20191122, 8 November 2019 (2019-11-08), XP051817428, Retrieved from the Internet <URL:https://ftp.3gpp.org/tsg_ran/WG2_RL2/TSGR2_108/Docs/R2-1915859.zip R2-1915859 Discussion on SA5 defined measurements for the immediate MDT.doc> [retrieved on 20191108]
- HUAWEI, HISILICON: "Discussion on SA5 defined measurements for the immediate MDT", 3GPP DRAFT; R2-1915859, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20191118 - 20191122, 8 November 2019 (2019-11-08), Mobile Competence Centre ; 650, route des Lucioles ; F-06921 Sophia-Antipolis Cedex ; France , XP051817428

## Description

### TECHNICAL FIELD

The present application relate to the field of communications and, in particular, to a data processing method and apparatus and a storage medium.

### BACKGROUND

With the development of communication technology, people have more higher requirement on the service quality of a terminal device. In related art, when the terminal device is in a RRC connection state, a layer-2 measurement on the service happened on the terminal device can be performed by a network device in real time, and the service can be adjusted and optimized according to measurement data, so as to improve the service quality.

However, some services can also be performed when the terminal device is in a non-RRC connection state. For example, a Multicast Broadcast Service (MBS) can be performed when the terminal devices is in the non-RRC connection state such as a RRC idle state (IDLE) or a RRC inactive state (INACTIVE) etc. At this time, the network device is unable to perform the layer-2 measurement on the service of the terminal device, thus unable to obtain reception status of the service by the terminal device, and unable to adjust the service in time, eventually the service quality of the terminal device is reduced.

WO2020/063588A1 discloses a drive testing method, where the drive testing method includes: a terminal receiving sidelink drive testing configuration information issued by a configuration side; according to the sidelink drive testing configuration information, performing drive testing on the environment where the terminal is located, and obtaining sidelink drive testing information; and reporting the obtained sidelink drive testing information to the configuration side.

A contribution by HUAWEI ET AL, titled "Discussion on SA5 defined measurements for the immediate MDT" for the 3GPP TSG RAN WG2 Meeting #108, no. R2-1915859, discusses the measurements for the immediate MDT defined by SA5, where for the immediate MDT measurements (including Data Volume, Scheduled IP Throughput for MDT, Packet loss rate) for QoS verification, it is proposed RAN2 to discuss per UE measurement definitions and capture them in TS 38.314 because TS 28.552 has not specified such definitions, and where for the immediate MDT measurements (including Data Volume, Scheduled IP Throughput for MDT, Packet loss rate) for QoS verification, it is proposed RAN2 to discuss per DRB per UE measurement definitions and capture them in TS 38.314 because TS 28.552 has not specified such definitions.

### SUMMARY

The present invention is defined in appended set of claims. The present application provides a data processing method and apparatus, and a storage medium to solve the technical problem of low service quality caused by the inability of a network device to obtain service status of a terminal device when the terminal device is in a non-RRC connection state.

In a first aspect, the present application provides a data processing method performed by a terminal according to claim 1.

In a second aspect, the present application provides a data processing apparatus for terminal device according to independent claim 4.

In a third aspect, the present application provides a processor-readable storage medium according to independent claim 9.

It should be understood, the content described in the above summary is not intended to limit the key or important features of the embodiments of the present application, or it is not intended to limit the scope of the present application. Other features of the present application will become easily understood from the following description.

### BRIEF DESCRIPTION OF DRAWINGS

In order to more clearly illustrate the technical solutions of the present application or in the prior art, the following will briefly introduce the drawings that need to be used in the description of the embodiments or the prior art. Obviously, the accompanying drawings in the following description are some embodiments of the present application. Those skilled in the art can also obtain other drawings based on these drawings without creative effort.
FIG. 1 is a schematic diagram of an application scenario provided by an embodiment of the present application.
FIG. 2 is a schematic diagram of signaling interaction of a data processing method provided by an embodiment of the present application.
FIG. 3 is a schematic diagram of signaling interaction of a data processing method provided by another embodiment of the present application.
FIG. 4 is a schematic diagram of signaling interaction of a data processing method provided by yet another embodiment of the present application.
FIG. 5 is a schematic diagram of signaling interaction of a data processing method provided by yet another embodiment of the present application.
FIG. 6 is a schematic structural diagram of a data processing apparatus provided by an embodiment of the present application.
FIG. 7 is a schematic structural diagram of a data processing device provided by another embodiment of the present application.
FIG. 8 is a schematic structural diagram of a terminal device provided by an embodiment of the present application.
FIG. 9 is a schematic structural diagram of a network device provided by an embodiment of the present application.

### DETAILED DESCRIPTION OF EMBODIMENTS

The term "and/or" in the present application describes the association relationship of associated objects, indicating that there may be three types of relationships, for example, A and/or B, which may mean: A exists alone, A and B exist simultaneously, and B exists alone. The character "/" generally indicates that the contextual objects are an "or" relationship. The term "multiple" in the embodiments of the present application refers to two or more, and other quantifiers are similar.

The technical solutions in the embodiments of the present application will be clearly and completely described below in conjunction with the accompanying drawings in the embodiments of the present application. Obviously, the described embodiments are only some of the embodiments of the present application, not all of them. Based on the embodiments in the present application, all other embodiments obtained by person of ordinary skill in the art without making creative efforts belong to the scope of protection of the present application.

First of all, some nouns in the embodiments of the present application are explained.

Layer-2: a data link layer is the second layer in the Open System Interconnection Reference Model (OSI), which is between a physical layer and a network layer. The data link layer is used to provide service to the network layer on the base of the service provided by the physical layer and its most basic service is to reliably transmit data from the network layer to a target network layer of the adjacent node.

Modulation and coding scheme (MCS): the MCS takes concerned factors that affect the communication rate as a column of a table, and takes an MCS index as a row to form a rate table. Each MCS index actually corresponds to the physical transmission rate under a set of parameter.

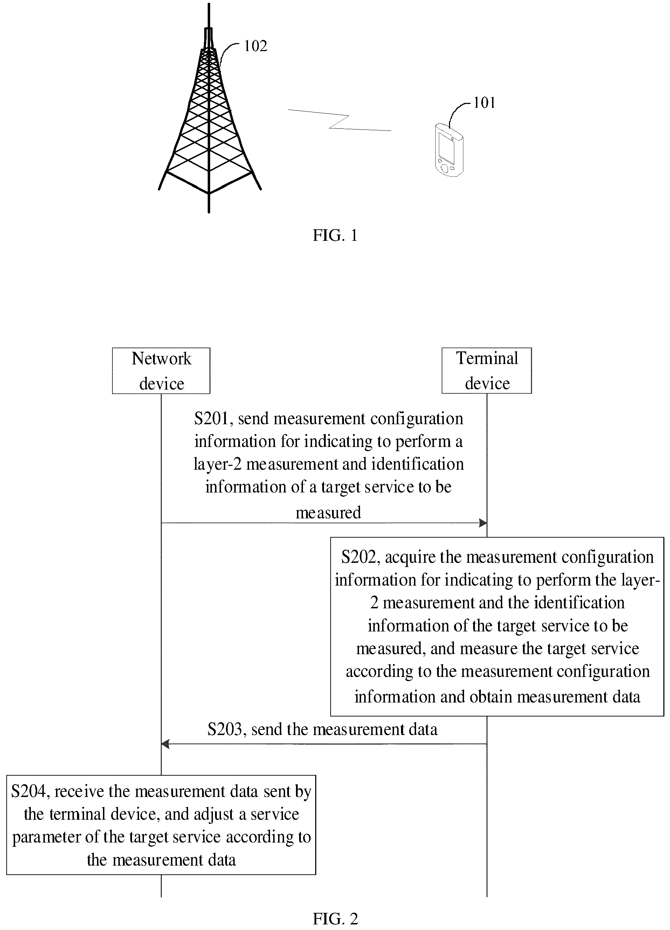

For the convenience of understanding, the application scenario of the embodiment of the present application is first described in conjunction with FIG. 1.

FIG. 1 is a schematic diagram of an application scenario provided by an embodiment of the present application. As shown in FIG. 1, this scenario includes: a terminal device 101 and a network device 102.

The above terminal device 101 may be a wireless terminal or a wired terminal. The wireless terminal may be a device that provides voice and/or other service data connectivity to a user, a handheld device with a wireless connection function, or other processing device connected to a wireless modem. The wireless terminal can communicate with one or more core network devices via the radio access network (RAN), and the wireless terminal can be a mobile terminal, such as a mobile phone (or called a "cellular" phone) and a computer with a mobile terminal, for example, such as portable, pocket, handheld, built-in or vehicle-mounted mobile devices which exchange language and/or data with the radio access network. For another example, the wireless terminal may also be a device such as a personal communication service (PCS) phone, a cordless phone, a session initiation protocol (SIP) phone, a wireless local loop (WLL) station, a personal digital assistant (PDA) etc. The wireless terminal may also be called a system, a subscriber unit, a subscriber station, a mobile station, a mobile, a remote station, a remote terminal, an access terminal, a user terminal, a user agent, and a user device, which are not limited herein. In another embodiment provided by the present application, the above terminal device may also be a device such as a smart watch or a tablet computer.

The above network device 102 may be a base station, specifically may be a base transceiver station (BTS) and/or a base station controller in global system of mobile communication (GSM) or in code division multiple access (CDMA), and it may also be a base station (NodeB, NB) and/or a radio network controller (RNC) in wideband code division multiple access (WCDMA), and it can also be an evolutional node B (4G base station or eNodeB) in long term evolution (LTE), or a relay station or an access point, or a base station in the future 5G network (a 5G base station) etc., the embodiment of the present application is not limited herein.

In practical applications, in order to ensure the quality of services performed on the terminal device 101, it is necessary to perform a layer-2 measurement of the services performed on the terminal device 101, so that the network device 102 can correspondingly adjust and optimize the services according to the measurement data.

When the terminal device 101 is in a RRC connection state, the layer-2 measurement performed by the network device 102 according to the terminal device 101 or according to the interaction data of the terminal device 101 can specifically include various measurement contents, for example, it can include one or more of a quantity of activating (connecting) UE, PRB usage, an uplink/downlink average packet delay, an uplink/downlink packet loss rate, an average packet loss rate, total/distributed data throughput, and a total/distributed data volume.

Moreover, when performing the layer-2 measurement, statistical input for various parameters of the layer such as a Media Access Control (MAC) layer, a Radio Link Control (RLC) layer, a Packet Data Convergence Protocol (PDCP) layer and a Service Data Adaptation Protocol (SDAP) layer etc. are required to be used, therefore, this process needs to be performed when the terminal device 101 is in the RRC connection state.

However, some services can also be performed when the terminal device 101 is in a non-RRC connection state, for example, a multicast broadcast service (MBS) can be performed when the terminal devices is in the non-RRC connection state such as a RRC idle state (IDLE) or a RRC inactive state (INACTIVE) etc. At this time, the network device 102 is unable to perform the layer-2 measurement on the service of terminal device 101, thus unable to obtain the reception status of the service by the terminal device 101, and unable to adjust the service in time, eventually the service quality of the terminal device 101 is reduced.

In order to solve the above problem, the embodiments of the present application provide a data processing method and apparatus, a device, and a storage medium. The terminal device performs a layer-2 measurement on a target service according to measurement configuration information, at this time, even if the terminal device is in the non-RRC connection state, it is also possible to perform the layer-2 measurement on the target service in time, so as to ensure the service quality.

Specifically, this solution is that the terminal device 101 acquires measurement configuration information for indicating to perform a layer-2 measurement and identification information of a target service to be measured; then measures the target service according to the measurement configuration information and obtains measurement data, where the measurement configuration information and the identification information of the target service may be sent by the network device 102 to the terminal device 101.

Further, the terminal device 101 sends the measurement data to the network device 102, correspondingly, after receiving the measurement data, the network device 102 adjusts, according to the measurement data, the service parameter of the target service performed on the terminal device 101, so as to ensure the service quality.

In addition, it should be noted that the above FIG. 1 is schematic, and the above scenario may also include other network devices or terminal devices, such as a wireless repeater device and a wireless backhaul device, etc. (not shown in FIG. 1), and the number of the terminal device 101 and the network device 102 in the above scenario are both one shown in the example, but it is not limited thereto.

The technical solutions according to the embodiments of the present application can be applied to various systems, especially 5G systems. For example, an applicable system can be: a global system of mobile communication (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems all include terminals and network devices. The system may also include a core network portion, such as an evolved packet system (EPS), a 5G system (5GS), etc.

The communication system applicable to the technical solutions provided by the embodiments of the present application includes a network device and a terminal device, where the network device may include an access network device and a core network device, and the access network device may be, for example, a wireless access network device, etc.

It should be understood that the method and apparatus provided in the embodiments of the present application are based on the same application concept, since the problem-solving principle of the method and apparatus are similar, the implementation of the apparatus and method can be referred to each other, and any repetition will not be repeated.

The following is a detailed explanation of the technical solutions of the embodiment of the present application and how the technical solutions of the present application solve the above technical problem with specific embodiments. The following specific embodiments can be combined with each other, and the same or similar concepts or processes may not be repeated in some embodiments.

FIG. 2 is a schematic diagram of signaling interaction of a data processing method provided by an embodiment of the present application. As shown in FIG. 2, in the data processing method provided in this embodiment, a terminal device and a network device specifically perform the following steps.

S201, the network device sends measurement configuration information for indicating to perform a layer-2 measurement and identification information of a target service to be measured.

S202, the terminal device acquires the measurement configuration information for indicating to perform the layer-2 measurement and the identification information of the target service to be measured, and measures the target service according to the measurement configuration information and obtains measurement data.

In practical applications, the measurement configuration information may include one or more of a measurement category, measurement time, and reporting time.

Specifically, the measurement category is used to indicate the measurement category for the terminal device to perform the layer-2 measurement; the measurement time is used to indicate the measurement time for the terminal device to perform the layer-2 measurement; the reporting time is used to indicate the time when the terminal device sends the measurement data to the network device after the measurement data was obtained.

Exemplarily, the measurement category may include at least one or more of: an average packet delay, a packet loss rate, throughput, a data volume, or stuck times; where the throughput is the amount of data successfully transmitted by the network device to the terminal device per unit time during the target service process; the data volume is a sum of the data volume of all data packets received by the terminal device when performing the target service.

In some embodiments, the identification information of the target service is used to indicate the target service to be measured by the terminal device, and multiple target services may be performed on the terminal device at the same time. Through the identification information of the target service, the terminal device can accurately determine the target service that needs to be measured.

Based on the above, this step specifically involves that the terminal device determines the target service for this measurement according to the identification information of the target service, and measures the target service according to the measurement configuration information, so as to obtain the measurement data of the target service.

Exemplarily, when the terminal device measures the average data packet delay of the target service, the measurement data is the average data packet delay, or when the terminal device measures the packet loss rate of the target service, the measurement data is the packet loss rate of the target service; for another example, when the terminal device measures the data throughput of the target service, the measurement data is the data throughput of the target service, etc.

It should be noted that the specific measurement methods for different measurement categories will be shown in subsequent embodiments.

S203, the terminal device sends the measurement data to the network device.

S204, the network device receives the measurement data sent by the terminal device, and adjusts a service parameter of the target service according to the measurement data.

In practical applications, the embodiments of the present application do not specifically limit the status of the terminal device when it performs the layer-2 measurement. For example, if the terminal device is in a non-RRC connection state, it can measure the target service according to the measurement configuration information, at this time, step S203 is: when the terminal device enters a RRC connection state, sending the measurement data to the network device. In this solution, the layer-2 measurement is performed by the terminal device in the non-RRC connection state, so that the network device can obtain the measurement data of the service on the terminal device in the non-RRC connection state in time, so as to adjust the service on the terminal in time and ensure the service quality.

On the other hand, when the terminal device is in the RRC connection state, the above layer-2 measurement can also be performed, at this time, step S203 is: after the terminal device obtains the measurement data, sending the measurement data to the network device subsequently. In practical applications, a network device usually sends target services to multiple terminal devices, which requires the network device to simultaneously measure the service data on all terminal devices, and this process will bring great data processing pressure to the network device. Therefore, through this solution, when the terminal device is in the RRC connection state, the layer-2 measurement is performed by the terminal device, so that the service data measurement tasks are distributed to each terminal device, and there is no need to perform a large-scale service data measurement on all terminal devices by the network device, so that the memory usage on the network device side is reduced and the data processing pressure of the network device is decouple.

In addition, it should be noted that the measurement data of different measurement categories correspond to different service parameters and different adjustment methods. As for the specific adjustment process, it will be shown in the subsequent embodiments.

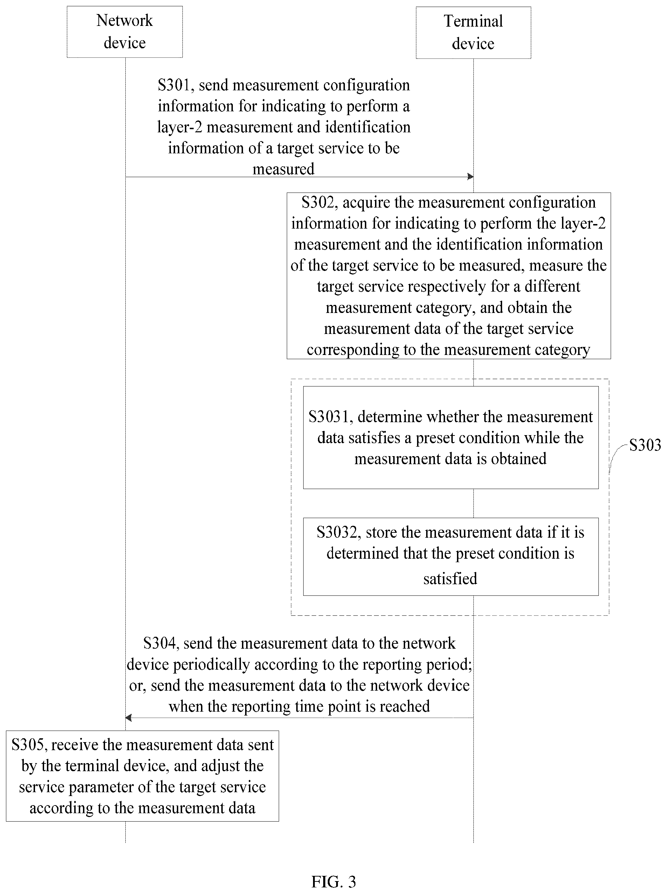

FIG. 3 is a schematic diagram of signaling interaction of a data processing method provided by another embodiment of the present application. As shown in FIG. 3, in a data processing method provided by the embodiment of the present application, a terminal device and a network device specifically perform the following steps:
S301, the network device sends measurement configuration information for indicating to perform a layer-2 measurement and identification information of a target service to be measured to the terminal device.
S302, the terminal device acquires the measurement configuration information for indicating to perform the layer-2 measurement and the identification information of the target service to be measured, measures the target service respectively for a different measurement category, and obtains the measurement data of the target service corresponding to the measurement category.

In some embodiments, the measurement category may include at least one or more of an average packet delay, a packet loss rate, throughput, a data volume, or stuck times.

Taking the packet loss rate, the throughput, the data volume, and the stuck times as examples, the process of measuring the above measurement categories will be described respectively in combination with specific embodiments:
1) when the measurement category is the packet loss rate, this step is: measuring the packet loss rate when the target service is performed by the terminal device, and determining the measured packet loss rate when the target service is performed by the terminal device as the measurement data.
   Specifically, firstly, counting the number of all data packets that are not successfully received when the terminal device performs the target service within the preset time; secondly, determining the total number of data packets of the target service within the preset time; finally, determining a ratio of the number of unsuccessfully received data packets to the total number of data packets as the packet loss rate of the target service.
2) when the measurement category is the throughput, this step is: measuring the data throughput when the target service is performed by the terminal device, and determining the measured data throughput when the target service is performed by the terminal device as the measurement data.
   Specifically, firstly, counting the total amount of data received by the terminal device when performing the target service within the preset time; secondly, determining a ratio of the total data amount to the preset time as the data throughput of the terminal device when performing the target service.
3) when the measurement category is the data volume, the measurement method is similar to the above scheme 2), that is, this step is: counting the total data volume corresponding to the target service received by the terminal device when performing the target service during the preset time, and determining the obtained total data volume as the measurement data.
4) when the measurement category is the stuck times, this step is: counting the stuck times when the target service is performed by the terminal device, and determining the obtained stuck times as the measurement data.

It should be noted that, when measuring the stuck times, statistics are generally performed by a higher layer (such as an application layer, etc.) of the terminal device.

Specifically, the terminal device receives the measurement configuration information whose measurement category is the stuck times, and sends the measurement configuration information to the application layer; correspondingly, the application layer measures the stuck times when the target service is performed by the terminal device. As for the specific measurement method of the stuck times, the prior art can be referred, which will not be repeated here.

In some embodiments, the measurement configuration information also includes a measurement time, which is used to indicate the time when the terminal device measures the target service. Where the measurement time includes a measurement period or a measurement time point.

Then, in the embodiment of the present application, the measurement of the target service specifically includes the following two schemes:
1) measuring the target service periodically according to the measurement period, and obtaining the measurement data acquired within the measurement period.
   It should be understood that the embodiment of the present application does not specifically limit the period length of the measurement period. Exemplarily, the period length of the measurement period may be any length such as 1 minute or 10 minutes.
   Exemplarily, taking the measurement period as 1 minute as an example, this step is: after receiving the measurement configuration information, the terminal device obtains the measurement category and the measurement period in the measurement configuration information, performs a measurement on each measurement category corresponding to the target service at intervals of 1 minute from the moment when the measurement configuration information is received, and obtains the measurement data of each measurement category in each measurement period.
2) measuring the target service when the measurement time point is reached, and obtaining the measurement data acquired at the measurement time point.

Similarly, the measurement time point may be any one or more time points, which is not specifically limited in this embodiment of the present application. Specifically, this step is: when the current time reaches the measurement time point, measuring each measurement category corresponding to the target service, and obtaining the measurement data measured at the current time point of each measurement category.

S303, storing the measurement data while the measurement data is obtained.

It should be noted that when the terminal is in the non-RRC connection state, storing the measurement data is a mandatory step; when the terminal is in the RRC connection state, storing the measurement data is an optional step.

Specifically, there are multiple ways to store the measurement data, which are not specifically limited in this embodiment of the present application. In some embodiments, after the measurement data is obtained, the obtained measurement data can be directly stored, so as to obtain all the measurement data when the target service is performed on the target terminal, and provide data reference for subsequent scenarios such as service adjustment. In some other embodiments, the measurement data may also be stored periodically, and the manner of periodic storage will not be repeated here.

In other implementations, due to the large amount of measurement data, it will occupy a large amount of memory in the terminal device if all the measured measurement data are stored. Therefore, it is also possible to store only the measurement data that meets the preset condition, the data storage pressure of the terminal device is decoupled, and the data processing performance of the terminal device is guaranteed.

The following is a detailed explanation of this type of stored procedure in conjunction with steps S3031 to S3032:
S3031, the terminal device determines whether the measurement data satisfies a preset condition while the measurement data is obtained.
S3032, if it is determined that the preset condition is satisfied, the terminal device stores the measurement data.

It should be noted that the preset conditions corresponding to different measurement categories are different, and detailed explanations are respectively provided on the judgment methods for whether the measurement data corresponding to different measurement categories meet the preset conditions:
1) when the measurement category is to measure the average packet delay of the target service (i.e., the measured data is the average packet delay of the target service), if the measured average packet delay value of the target service is greater than the preset average data packet delay threshold value, it is determined that the measured average packet delay satisfies the preset condition;
2) when the measurement category is to measure the packet loss rate of the target service (i.e., when the measurement data is the packet loss rate of the target service), if the measured packet loss rate of the target service is greater than the preset packet loss rate threshold value, it is determined that the measured packet loss rate satisfies the preset condition;
3) when the measurement category is to measure the throughput of the target service (i.e., the measurement data is the throughput of the target service), if the measured throughput of the target service is less than the preset throughput threshold value, it is determined that the measured throughput satisfies the preset condition;
4) when the measurement category is to measure the data volume of the target service (i.e., the measured data is the data volume of the target service), if the measured data volume of the target service is less than the preset data volume threshold value, it is determined that the measured data volume satisfies the preset condition;
5) when the measurement category is to measure the stuck times of the target service (i.e., the measurement data is the stuck times of the target service), if the measured stuck times of the target service is greater than the preset stuck times threshold value, it is determined that the measured stuck times of the target service satisfies the preset condition.

It should be noted that the embodiments of the present application do not limit the specific values of the thresholds corresponding to the above measurement categories, for example: the average packet delay threshold value, the packet loss rate threshold value, the throughput threshold value, the data volume threshold value and the stuck times threshold value, etc.

In some embodiments, the threshold values corresponding to the above measurement categories may be sent to the terminal device through the measurement configuration information, and a specific sending method refers to the above embodiments, which will not be repeated here.

Further, storing the measurement data that satisfies the above preset conditions, correspondingly, discarding the measurement data that does not satisfy the above preset conditions.

Through this solution, only the measurement data that satisfies the preset conditions are stored, which can decouple the data storage pressure of the terminal device, thereby improve the data processing performance of the terminal device.

S304, sending the measurement data to the network device.

In practical applications, the measurement configuration information may also include a reporting time, which is used to instruct the terminal device to send the measurement data to the network device according to the reporting time.

The reporting time may include a reporting period or a reporting time point, and this step specifically is: sending the measurement data to the network device periodically according to the reporting period; or, sending the measurement data to the network device when the reporting time point is reached.

S305, the network device receives the measurement data sent by the terminal device, and adjusts the service parameter of the target service according to the measurement data.

It should be noted that the solution of adjusting the service parameter of the target service is shown in the subsequent embodiments, and will not be repeated here.

In practical applications, the terminal device can actively send the measurement data to the network device, and can also send measurement data to the network device with a permission of the network device, where the specific scheme when the terminal device actively sends the measurement data to the network device is as follows.

On the one hand, when the measurement configuration information does not include the reporting time, the terminal device may obtain the measurement data in the non-RRC connection state, and the measurement data is stored in this case, then the measurement data is sent to the network device when the terminal device is in the RRC connection state. The specific solution refers to the embodiment shown in FIG. 2, which will not be repeated here.

On the other hand, when the measurement configuration information includes the reporting time, the terminal device sends the measurement data to the network device according to the reporting time after obtaining the measurement data. The specific solution refers to the embodiment shown in FIG. 3, which will not be repeated here.

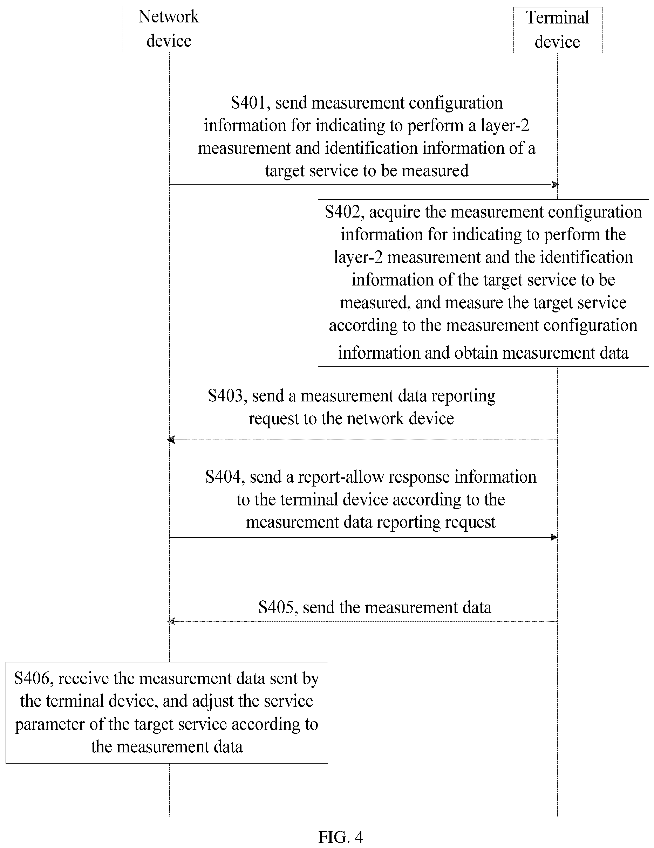

When the terminal device sends the measurement data to the network device with the permission of the network device, before sending the measurement data to the network device, it also needs to send a measurement data report request to the network device, after the network device permits it, then the terminal device sends the measurement data to the network device. The following is a detailed explanation of this scheme in conjunction with FIG. 4.

FIG. 4 is a schematic diagram of signaling interaction of a data processing method provided by yet another embodiment of the present application. As shown in FIG. 4, in a data processing method provided by the embodiment of the present application, a terminal device and a network device perform the following steps.

S401, the network device sends measurement configuration information for indicating to perform a layer-2 measurement and identification information of a target service to be measured to the terminal device.

S402, the terminal device acquires the measurement configuration information for indicating to perform the layer-2 measurement and the identification information of the target service to be measured, and measures the target service according to the measurement configuration information and obtains measurement data.

It should be noted that steps S401 to S402 are similar to the solutions in the embodiments shown in FIG. 2 and FIG. 3. For details, please refer to the above embodiments and will not repeated here.

S403, the terminal device sends a measurement data reporting request to the network device.

It should be understood that the embodiments of the present application do not specifically limit the specific solution for the terminal device to send the measurement data reporting request to the network device.

Exemplarily, on the one hand, when the measurement configuration data does not include a reporting time, the terminal device directly sends the measurement data reporting request to the network device after the measurement data is obtained;

On the other hand, when the measurement configuration information includes the reporting time, the terminal device sends the measurement data reporting request according to the reporting time to the network device after the measurement data is obtained.

The reporting time includes: a reporting period and a reporting time point, and this step specifically is: the terminal device sends the measurement data reporting request to the network device periodically according to the reporting period after the measurement data is obtained; or, sends the measurement data reporting request to the network device when the reporting time point is reached.

S404, the network device sends a report-allow response information to the terminal device according to the measurement data reporting request.

S405, the terminal device sends the measurement data to the network device if the report-allow response information returned by the network device is received.

Specifically, the terminal device sends the measurement data to the network device after the report-allow response information returned by the network device is received. Correspondingly, if the terminal device does not receive the report-allow response information returned by the network device, it will continue to send the measurement data reporting request to the network device according to the scheme of above step S403 until it receives the report-allow response information returned by the network device, or, until other response information returned by the network device is received, for example, response information for discarding measurement data, response information for reporting time, etc.

Further, if the terminal device receives the response information for discarding the measurement data, the measurement data that needs to be reported this time is discarded, and if the terminal device receives the response information of the reporting time, the measurement data is re-reported according to the reporting time.

S406, the network device adjusts the service parameter of the target service according to the measurement data.

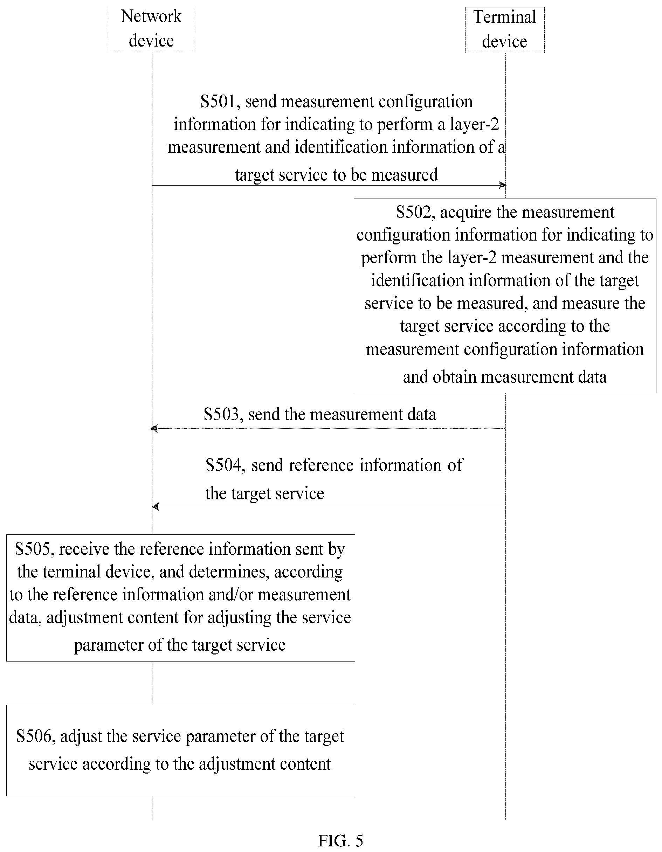

In practical applications, the adjustment methods corresponding to different measurement categories are different, the following is a detailed explanation of the scheme for adjusting the service parameter of the target service by the network device combined with the implementation example shown in FIG. 5.

FIG. 5 is a schematic diagram of signaling interaction of a data processing method provided by yet another embodiment of the present application. As shown in FIG. 5, in the data processing method provided by the embodiment of the present application, a terminal device and a network device specifically perform the following steps.

S501, the network device sends measurement configuration information for indicating to perform a layer-2 measurement and identification information of a target service to be measured to the terminal device.

S502, the terminal device acquires the measurement configuration information for indicating to perform the layer-2 measurement and the identification information of the target service to be measured, and measures the target service according to the measurement configuration information and obtains measurement data.

S503, the terminal device sends the measurement data to the network device.

It should be noted that steps S501 to S502 are similar to the solutions and principles in the embodiments shown in FIG. 2 and FIG. 4. For details, please refer to the above embodiments and will not repeated here.

It should also be noted that in some scenarios, after the network device sends the measurement configuration information to the terminal device, it may delete the sent measurement configuration information to reduce the storage pressure of the network device. Therefore, at the same time when the terminal device sending the measurement data to the network device, it is also necessary to send measurement configuration information to the network device, so that the network device determines the measurement configuration information corresponding to the measurement data.

S504, the terminal device sends reference information of the target service to the network device.

The reference information includes at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

S505, the network device receives the reference information sent by the terminal device, and determines, according to the reference information and/or the measurement data, adjustment content for adjusting the service parameter of the target service.

The service parameter includes at least one or more of a modulation and coding scheme of the target service, a number of a base station for sending the target service, or a location of a base station for sending the target service;

Correspondingly, the adjustment content includes at least one or more of adjusting the modulation and coding scheme of the target service, adjusting the number of the base station for sending the target service, or adjusting the location of the base station for sending the target service.

In some embodiments, when the measurement data includes the throughput, if it is determined that the throughput is less than the throughput threshold value, the adjustment content for adjusting the service parameter of the target service may be determined according to the measurement data as follows: adjusting the modulation and coding scheme of the target service.

In some other embodiments, when the measurement data is the stuck times, if it is determined that the stuck times is greater than the stuck times threshold value, and the geographical location where the stuck occurs is determined according to the reference information, then it is determined based on the measurement data and the reference information that the adjustment content of adjusting the service parameter of the target service includes: adjusting the number of the base station for sending the target service, or adjusting the antenna angle of the base station for sending the target service.

It should be noted that the scheme for determining the adjustment content based on the measurement data corresponding to other measurement categories is similar to the scheme provided in the above example, and will not be repeated here.

S506, the network device adjusts the service parameter of the target service according to the adjustment content.

Correspondingly, in this step, if it is determined that the adjustment content is to adjust the modulation and coding scheme corresponding to the target service, then the modulation and coding scheme of the target service can be adjusted; if it is determined that the adjustment content is the number of the base station for sending the target service, then the number of base station at the location where the stuck occurs can be increased; if it is determined that the adjustment content is the location of the base station for sending the target service, then the antenna angle of the base station at the location where the stuck occurs can be adjusted.

It should be noted that the above adjustment solution is exemplary, and in practical applications, other adjustment means may be used to adjust the service parameter of the target service, which will not be repeated here.

It should be understood that although the steps in the flow charts in the above embodiments are shown sequentially as indicated by the arrows, these steps are not necessarily executed sequentially in the order indicated by the arrows. Unless explicitly stated in this text, there is no strict order restriction on the execution of these steps, and they can be executed in other orders. Moreover, at least a portion of the steps in the diagram may include multiple sub-steps or stages, these sub-steps or stages are not necessarily be executed at the same time, but may be executed at different times, and their execution order may not necessarily sequential, but may rotate or alternate with at least a portion of other steps or sub steps or stages.

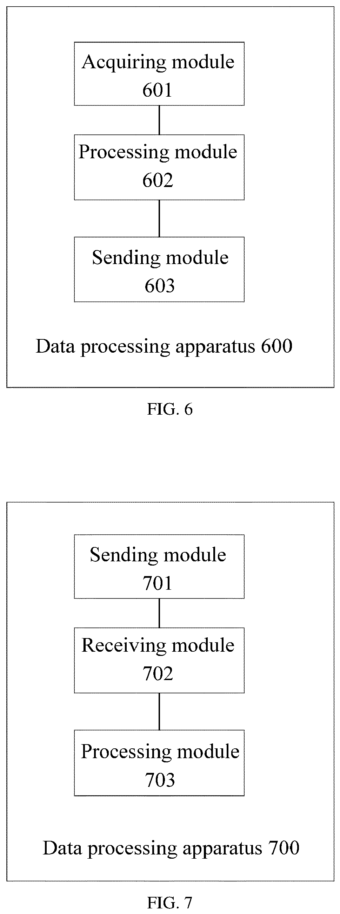

On the terminal device side, an embodiment of the present application provides a data processing apparatus, and FIG. 6 is a schematic structural diagram of a data processing apparatus provided by an embodiment of the present application. As shown in FIG. 6, the data processing device 600 includes:
an acquiring module 601, configured to acquire measurement configuration information for indicating to perform a layer-2 measurement and identification information of a target service to be measured; a processing module 602, configured to measure the target service according to the measurement configuration information and obtain measurement data; and a sending module 603, configured to send the measurement data to a network device.

In another embodiment provided by the present application, the measurement configuration information includes a measurement category, and the measurement category includes at least one or more of: an average packet delay, a packet loss rate, throughput, a data volume, or stuck times; the acquiring module 601 is specifically configured to: for a different measurement category, measure the target service respectively, and obtain the measurement data of the target service corresponding to the measurement category.

In another embodiment provided by the present application, the measurement configuration information includes a measurement time, where the measurement time includes a measurement period or a measurement time point;

The acquiring module 601 is specifically configured to: measure the target service periodically according to the measurement period, and obtain the measurement data acquired within the measurement period; or, measure the target service when the measurement time point is reached, and obtain the measurement data of the target service measured at the measurement time point.

In another embodiment provided by the present application, the processing module 602 is further configured to: store the measurement data while the measurement data is obtained.

In another embodiment provided by the present application, the processing module 602 is specifically configured to: determine whether the measurement data satisfies a preset condition; and store the measurement data if it is determined that the preset condition is satisfied.

In another embodiment provided by the present application, the measurement configuration information includes a reporting time, where the reporting time includes a reporting period or a reporting time point; the sending module 603 is specifically configured to: send the measurement data to the network device periodically according to the reporting period; or, send the measurement data to the network device when the reporting time point is reached.

In another embodiment provided by the present application, the sending module 603 is specifically configured to: send a measurement data reporting request to the network device; and send the measurement data to the network device if a report-allow response information returned by the network device is received.

In another embodiment provided by the present application, the sending module 603 is specifically configured to: send the measurement data and the measurement configuration information to the network device.

In another embodiment provided by the present application, the sending module 603 is further configured to send reference information of the target service to the network device; where the reference information includes at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

It should be noted that the above apparatus provided in the present application can correspondingly implement all the method steps implemented by the terminal device in the above method embodiments, and can achieve the same technical effects. The same parts and beneficial effects as the method embodiments in this embodiment will not be specifically elaborated here.

On the network device side, an embodiment of the present application provides a data processing apparatus, and FIG. 7 is a schematic structural diagram of a data processing apparatus provided in another embodiment of the present application. As shown in FIG. 7, the data processing apparatus 700 includes:
a sending module 701, configured to send measurement configuration information for indicating to perform a layer-2 measurement and identification information of a target service to be measured to a terminal device; a receiving module 702, configured to receive the measurement data of the target service sent by the terminal device, where the measurement data is obtained by the terminal device measuring the target service according to the measurement configuration information; and a processing module 703, configured to adjust a service parameter of the target service according to the measurement data. In another embodiment provided by the present application, the receiving module 702 is also configured to: receive reference information sent by the terminal device.

The reference information includes at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

In another embodiment provided by the present application, the service parameter includes at least one or more of a modulation and coding scheme of the target service, a number of a base station for sending the target service, or a location of a base station for sending the target service.

The processing module 703 is specifically configured to: determine, according to the reference information and/or the measurement data, adjustment content for adjusting the service parameter of the target service, where the adjustment content includes at least one or more of adjusting the modulation and coding scheme of the target service, adjusting the number of the base station for sending the target service, or adjusting the location of the base station for sending the target service; adjust the service parameter of the target service according to the adjustment content.

It should be noted that the above apparatus provided in the present application can correspondingly implement all the method steps implemented by the network device in the above method embodiments, and can achieve the same technical effects. The same parts and beneficial effects as the method embodiments in this embodiment will not be specifically elaborated here.

In addition, it should be noted that, in the data processing apparatus in the above embodiments, each module may be fully or partially implemented by software, hardware or a combination thereof. The above modules can be embedded in or be independent of the processor in a computer device in hardware form, and can also be stored in the memory of the computer device in software form, so that the processor can call and execute the corresponding operations of the above modules.

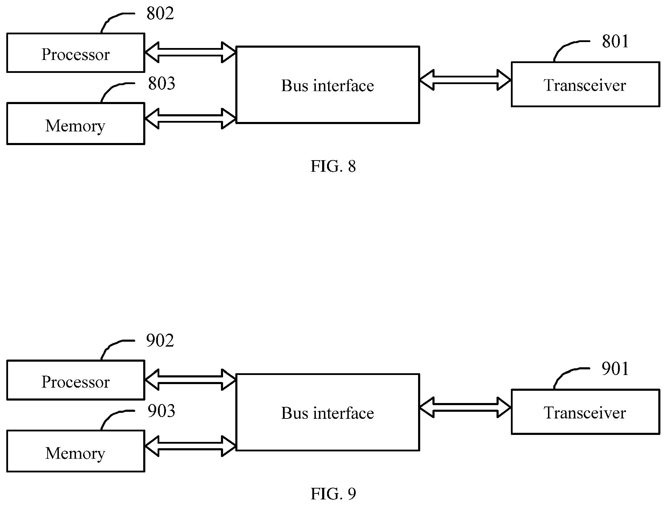

FIG. 8 is a schematic structural diagram of a terminal device provided by an embodiment of the present application. As shown in FIG. 8, a terminal device 800 includes: a transceiver 801, a processor 802 and a memory 803.

The transceiver 801 is configured to receive and send data under control of the processor 802.

In FIG. 8, the bus architecture can include any number of interconnected buses and bridges, specifically one or more processors represented by the processor 802 and various circuits of the memory represented by the memory 803 are linked together. The bus architecture can also link together various other circuits such as peripherals, voltage regulators, and power management circuits, etc., which are well-known in the art, therefore, this text will not further describe herein. The bus interface provides an interface. The transceiver 801 may be a plurality of elements, including a transmitter and a receiver, providing a unit for communicating with various other devices on a transmission media, including wireless channels, wired channels, optical cables, and other transmission media.

The processor 802 is responsible for managing the bus architecture and general processing, and the memory 803 can store data used by the processor 802 when performing operations.

In another embodiment provided by the present application, the processor 802 may be a central processing unit (CPU), an application specific integrated circuit (ASIC), a field programmable gate array (FPGA) or a Complex Programmable Logic Device (CPLD), and the processor can also adopt a multi-core architecture.

The processor 802 calls a computer program stored in the memory 803 to execute any methods related to the terminal device provided in the embodiments of the present application according to the obtained executable instructions, and the processor and the memory may also be arranged physically separately.

Specifically, the processor 802 is configured to read the computer program stored in the memory and perform the following operations: acquiring measurement configuration information for indicating to perform a layer-2 measurement and identification information of a target service to be measured; measuring the target service according to the measurement configuration information and obtaining measurement data; and sending the measurement data to a network device.

In another embodiment provided by the present application, the measurement configuration information includes a measurement category, where the measurement category includes at least one or more of: an average packet delay, a packet loss rate, throughput, a data volume, or stuck times; the measuring the target service according to the measurement configuration information and obtaining the measurement data specifically includes: for a different measurement category, measuring the target service respectively, and obtaining the measurement data of the target service corresponding to the measurement category.

In another embodiment provided by the present application, the measurement configuration information includes a measurement time, where the measurement time includes a measurement period or a measurement time point; the measuring the target service according to the measurement configuration information and obtaining the measurement data specifically includes: measuring the target service periodically according to the measurement period, and obtaining the measurement data acquired within the measurement period; or, measuring the target service when the measurement time point is reached, and obtaining the measurement data of the target service measured at the measurement time point.

In another embodiment provided by the present application, the processor 802 is further configured to perform the following operation: storing the measurement data while the measurement data is obtained.

In another embodiment provided by the present application, the storing the measurement data while the measurement data is obtained specifically includes: determining whether the measurement data satisfies a preset condition; and storing the measurement data if it is determined that the preset condition is satisfied.

In another embodiment provided by the present application, the measurement configuration information includes a reporting time, where the reporting time includes a reporting period or a reporting time point; the sending the measurement data to the network device specifically includes: sending the measurement data to the network device periodically according to the reporting period; or, sending the measurement data to the network device when the reporting time point is reached.

In another embodiment provided by the present application, the sending the measurement data to the network device includes: sending a measurement data reporting request to the network device; and sending the measurement data to the network device if a report-allow response information returned by the network device is received.

In another embodiment provided in the present application, the sending the measurement data to the network device includes: sending the measurement data and the measurement configuration information to the network device.

In another embodiment provided by the present application, the processor 802 is further configured to perform the following operation: sending reference information of the target service to the network device; where the reference information includes at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

It should be noted that the above terminal device provided in the present application can achieve all the method steps corresponding to the terminal device in the above method embodiments, and can achieve the same technical effect. The same parts and beneficial effects in this embodiment and the method embodiments will not be specifically elaborated here.

FIG. 9 is a schematic structural diagram of a network device provided by an embodiment of the present application. As shown in FIG. 9, a network device 900 includes: a transceiver 901, a processor 902 and a memory 903.

The transceiver 901 is configured to receive and send data under control of the processor 902.

In FIG. 9, the bus architecture can include any number of interconnected buses and bridges, specifically one or more processors represented by the processor 902 and various circuits of the memory represented by the memory 903 are linked together. The bus architecture can also link together various other circuits such as peripherals, voltage regulators, and power management circuits, etc., which are well-known in the art, therefore, this text will not further describe herein. The bus interface provides an interface. The transceiver 901 may be a plurality of elements, including a transmitter and a receiver, providing a unit for communicating with various other devices on a transmission media, including wireless channels, wired channels, optical cables, and other transmission media.

The processor 902 is responsible for managing the bus architecture and usual processing, and the memory 903 can store data used by the processor 902 when performing operations

In another embodiment provided by the present application, the processor 902 may be a central processing unit (CPU), an application specific integrated circuit (ASIC), a field programmable gate array (FPGA) or a Complex Programmable Logic Device (CPLD), and the processor can also adopt a multi-core architecture.

The processor 902 calls a computer program stored in the memory 903 to execute any methods related to the terminal device provided in the embodiments of the present application according to the obtained executable instructions, and the processor and the memory may also be arranged physically separately.

Specifically, the processor 902 is configured to read the computer program stored in the memory and perform the following operations: sending measurement configuration information for indicating to perform a layer-2 measurement and identification information of a target service to be measured to a terminal device; receiving measurement data of the target service sent by the terminal device, where the measurement data is obtained by the terminal device measuring the target service according to the measurement configuration information; and adjusting a service parameter of the target service according to the measurement data.

In another embodiment provided by the present application, the processor 902 is further configured to perform the following operation: receiving reference information sent by the terminal device; where the reference information includes at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

In another embodiment provided by the present application, the service parameter includes at least one or more of a modulation and coding scheme of the target service, a number of a base station for sending the target service, or a location of a base station for sending the target service; the adjusting the service parameter of the target service according to the measurement data includes: determining, according to the reference information and/or the measurement data, adjustment content for adjusting the service parameter of the target service, where the adjustment content includes at least one or more of adjusting the modulation and coding scheme of the target service, adjusting the number of the base station for sending the target service, or adjusting the location of the base station for sending the target service; and adjusting the service parameter of the target service according to the adjustment content.

It should be noted that the above network device provided in the present application can achieve all the method steps corresponding to the network device in the above method embodiments, and can achieve the same technical effect. The same parts and beneficial effects in this embodiment and the method embodiments will not be specifically elaborated here.

It should be noted that the division of unit in the embodiment of the present application is schematic and only serves as a logical functional division. In actual implementation, there may be other division methods. In addition, in various embodiments of the present application, each functional unit can be integrated into a single processing unit, each unit can physically exist separately, or two or more units can be integrated into one unit. The aforementioned integrated unit may be realized in hardware or software functional unit.

If the aforementioned integrated unit is realized in software function unit and sold or used as independent product, it can be stored in a processor-readable storage medium. Based on this understanding, the technical solution of the present application is essentially or part of the contribution to the prior art or all or part of the technical solution can be embodied in the form of a software product, and the computer software product is stored in a storage medium, including several instructions to make a computer device (which may be a personal computer, a server, or a network device, etc.) or a processor execute all or part of the steps of the methods in various embodiments of the present application. The aforementioned storage medium includes: U disk, mobile hard disk, read-only memory (ROM), random access memory (RAM), magnetic disk or optical disk and other various media that can store program codes.

On the terminal device side, an embodiment of the present application provides a processor-readable storage medium, the processor-readable storage medium stores a computer program, and the computer program is configured to enable the processor to execute the method related to the terminal device provided in the embodiment of the present application, so that the processor can implement all the method steps implemented by the terminal device in the aforementioned method embodiments, and can achieve the same technical effect, and the same parts and beneficial effects in this embodiment and the method embodiments will not be specifically elaborated here.

On the network device side, an embodiment of the present application provides a processor-readable storage medium, the processor-readable storage medium stores a computer programs, and the computer program is configured enable the processor to execute the method related to the network device provided in the embodiment of the present application, so that the processor can implement all the method steps implemented by the network device in the aforementioned method embodiments, and can achieve the same technical effect, and the same parts and beneficial effects in this embodiment and the method embodiments will not be specifically elaborated here.

The processor-readable storage medium may be any available medium or data storage device that the processor can access, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid state disk (SSD)), etc.

On the terminal device side, an embodiment of the present application further provides a computer program product containing instructions, the computer program is stored in a storage medium, at least one processor can read the computer program from the storage medium, and when the at least one processor executes the computer program, all the method steps implemented by the terminal device in the aforementioned method embodiments can be achieved, and the same technical effect can be achieved, so the same parts and beneficial effects in this embodiment and the method embodiments will not be specifically elaborated here.

On the network device side, an embodiment of the present application further provides a computer program product containing instructions, the computer program is stored in a storage medium, at least one processor can read the computer program from the storage medium, and when the at least one processor executes the computer program, all the method steps implemented by the network device in the aforementioned method embodiments can be achieved, and the same technical effect can be achieved, so the same parts and beneficial effects in this embodiment and the method embodiments will not be specifically elaborated here.

The embodiment of the present application also provides a communication system, including a terminal device and a network device. The terminal device can execute all the method steps performed by the terminal device in the aforementioned method embodiments, and can achieve the same technical effect. The network device can perform all the method steps performed by the network device side in the aforementioned method embodiments, and can achieve the same technical effect. So the same parts and beneficial effects in this embodiment and the method embodiments will not be specifically elaborated here.

Those skilled in the art should understand that the embodiments of the present application may be provided as methods, systems, or computer program products. Therefore, the present application may adopt a complete hardware embodiment, a complete software embodiment, or a combination of software and hardware embodiment. Furthermore, the present application may take a form of a computer program product implemented on one or more computer available storage media (including but not limited to disk storage and optical storage, etc.) having computer-usable program code.

The present application is described with reference to schematic diagrams and/or block diagrams of signaling interactions of methods, apparatuses, and computer program products according to embodiments of the present application. It should be understood that each flow and/or block in the signaling interaction diagram and/or block diagram, and a combination of procedures and/or blocks in the signaling interaction diagram and/or block diagram can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce a device for realizing the functions specified in one or more procedures of the signaling interaction schematic diagram and/or one or more blocks of the block diagram.

These processor-executable instructions may also be stored in a processor-readable memory capable of directing a computer or other programmable data processing device to operate in a specific manner, such that the instructions stored in the processor-readable memory produce a manufacturing product, the instruction device implements the functions specified in one or more procedures in the signaling interaction schematic diagram and/or one or more blocks in the block diagram.

These processor-executable instructions can also be loaded onto a computer or other programmable data processing device, causing a series of operational steps to be performed on the computer or other programmable device to generate a computer-implemented process, the executed instructions provide steps for realizing the functions specified in one or more procedures of the signaling interaction diagram and/or one or more blocks of the block diagram.

## Claims

1. A data processing method, performed by a terminal device, the method comprising:
acquiring (S202) measurement configuration information for indicating to perform a layer-2 measurement and identification information of a target service;
obtaining measurement data of the target service according to the measurement configuration information; and
sending (S203) the measurement data to a network device;
wherein the measurement configuration information comprises a measurement category, and the measurement category comprises at least one or more of: an average packet delay, a packet loss rate, throughput, a data volume, or stuck times;
the obtaining the measurement data of the target service according to the measurement configuration information specifically comprises:
for each of different measurement categories, measuring (S302) the target service respectively, and obtaining (S302) the measurement data of the target service corresponding to the measurement category;
wherein the data processing method further comprises:
storing (S303) the measurement data while the measurement data is obtained;
**characterized in that**,
the storing (S303) the measurement data specifically comprises:
determining (S3031) whether the measurement data satisfies a preset condition, wherein preset conditions corresponding to the different measurement categories are different; and
storing (S3032) the measurement data if it is determined that the preset condition is satisfied.

2. The data processing method according to claim 1, wherein the measurement configuration information comprises a measurement time, and the measurement time comprises a measurement period or a measurement time point;
the obtaining the measurement data of the target service according to the measurement configuration information specifically comprises:
measuring the target service periodically according to the measurement period, and obtaining the measurement data of the target service acquired within the measurement period;
or, measuring the target service when the measurement time point is reached, and obtaining the measurement data of the target service measured at the measurement time point.

3. The data processing method according to any one of claims 1 to 2, wherein the data processing method further comprises:
sending (S504) reference information of the target service to the network device;
wherein the reference information comprises at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, or signal quality of an adjacent cell of a cell where the terminal is located.

4. A data processing apparatus (600), for a terminal device, the apparatus comprising:
an acquiring module (601), configured to acquire measurement configuration information for indicating to perform a layer-2 measurement and identification information of a target service;
a processing module (602), configured to obtain measurement data of the target service according to the measurement configuration information; and
a sending module (603), configured to send the measurement data to a network device;
wherein the measurement configuration information comprises a measurement category, and the measurement category comprises at least one or more of an average packet delay, a packet loss rate, throughput, a data volume, or stuck times;
wherein the acquiring module (601) is specifically configured to:
for each of different measurement categories, measure the target service respectively, and obtain the measurement data of the target service corresponding to the measurement category;
wherein the processing module (602) is further configured to:
store the measurement data while the measurement data is obtained;
**characterized in that**,
wherein the processing module (602) is specifically configured to:
determine whether the measurement data satisfies a preset condition, wherein preset conditions corresponding to the different measurement categories are different; and
store the measurement data if it is determined that the preset condition is satisfied.

5. The data processing apparatus (600) according to claim 4, wherein the measurement configuration information comprises a reporting time, and the reporting time comprises a reporting period or a reporting time point;
the sending module (603) is specifically configured to:
send the measurement data to the network device periodically according to the reporting period;
or, send the measurement data to the network device when the reporting time point is reached.

6. The data processing apparatus (600) according to claim 4 or 5, wherein the sending module (603) is specifically configured to:
send a measurement data reporting request to the network device; and
send the measurement data to the network device if a report-allow response information returned by the network device is received.

7. The data processing apparatus (600) according to claim 4 or 5, wherein the sending module (603) is specifically configured to:
send the measurement data and the measurement configuration information to the network device.

8. The data processing apparatus (600) according to claim 4 or 5, wherein the sending module (603) is specifically configured to:
send reference information of the target service to the network device;
wherein the reference information comprises at least one or more of identification information of a cell where the terminal device is located, identification information of an adjacent cell of a cell where the terminal device is located, geographic location information of the terminal device, signal strength of a cell where the terminal device is located, signal strength of an adjacent cell of a cell where the terminal device is located, signal quality of a cell where the terminal device is located, and signal quality of an adjacent cell of a cell where the terminal is located.

9. A processor-readable storage medium, storing a computer program comprising instructions which, when executed by a processor of a processing apparatus for a terminal device, cause the terminal device to execute the data processing method according to any one of claims 1 to 3.

## Patentansprüche

1. Datenverarbeitungsverfahren, das von einer Endgerätevorrichtung ausgeführt wird, wobei das Verfahren Folgendes umfasst:
Erfassen (S202) von Messkonfigurationsinformationen, die anzeigen, dass eine Layer-2-Messung durchzuführen ist, sowie von Identifikationsinformationen eines Zieldienstes;
Erhalten von Messdaten des Zieldienstes gemäß den Messkonfigurationsinformationen; und
Senden (S203) der Messdaten an eine Netzwerkvorrichtung;
wobei die Messkonfigurationsinformationen eine Messkategorie umfassen und die Messkategorie mindestens eines oder mehrere der folgenden Elemente umfasst: eine durchschnittliche Paketverzögerung, eine Paketverlustrate, einen Durchsatz, ein Datenvolumen oder Blockierungszeiten;
das Erhalten der Messdaten des Zieldienstes gemäß den Messkonfigurationsinformationen umfasst insbesondere:
für jede der unterschiedlichen Messkategorien, Messen (S302) des Zieldienstes bzw. Erhalten (S302) der Messdaten des Zieldienstes, die der Messkategorie entsprechen;
wobei das Datenverarbeitungsverfahren ferner umfasst:
Speichern (S303) der Messdaten, während die Messdaten erhalten werden;
**dadurch gekennzeichnet, dass**
das Speichern (S303) der Messdaten insbesondere umfasst:
Feststellen (S3031), ob die Messdaten eine voreingestellte Bedingung erfüllen, wobei die voreingestellten Bedingungen, die den unterschiedlichen Messkategorien entsprechen, unterschiedlich sind; und
Speichern (S3032) der Messdaten, wenn festgestellt wird, dass die voreingestellte Bedingung erfüllt ist.

2. Datenverarbeitungsverfahren nach Anspruch 1, wobei die Messkonfigurationsinformationen eine Messzeit umfassen und die Messzeit einen Messzeitraum oder einen Messzeitpunkt umfasst;
das Erhalten der Messdaten des Zieldienstes gemäß den Messkonfigurationsinformationen umfasst insbesondere:
periodisches Messen des Zieldienstes gemäß dem Messzeitraum und
Erhalten der Messdaten des Zieldienstes, die innerhalb des Messzeitraums erfasst werden;
oder Messen des Zieldienstes, wenn der Messzeitpunkt erreicht ist, und Erhalten der Messdaten des Zieldienstes, die zum Messzeitpunkt gemessen werden.

3. Datenverarbeitungsverfahren nach einem der Ansprüche 1 bis 2, wobei das Datenverarbeitungsverfahren ferner umfasst:
Senden (S504) von Referenzinformationen des Zieldienstes an die Netzwerkvorrichtung;
wobei die Referenzinformationen mindestens eine oder mehrere von Identifikationsinformationen einer Zelle, in der sich die Endgerätevorrichtung befindet, Identifikationsinformationen einer benachbarten Zelle einer Zelle, in der sich die Endgerätevorrichtung befindet, geografischen Standortinformationen der Endgerätevorrichtung, Signalstärke einer Zelle, in der sich die Endgerätevorrichtung befindet, Signalstärke einer benachbarten Zelle einer Zelle, in der sich die Endgerätevorrichtung befindet, Signalqualität einer Zelle, in der sich die Endgerätevorrichtung befindet, oder Signalqualität einer benachbarten Zelle einer Zelle, in der sich das Endgerät befindet, umfassen.

4. Datenverarbeitungsgerät (600) für eine Endgerätevorrichtung, wobei das Gerät Folgendes umfasst:
ein Erfassungsmodul (601), das dazu konfiguriert ist, Messkonfigurationsinformationen, die anzeigen, dass eine Layer-2-Messung durchzuführen ist, sowie Identifikationsinformationen eines Zieldienstes zu erfassen;
ein Verarbeitungsmodul (602), das dazu konfiguriert ist, Messdaten des Zieldienstes gemäß den Messkonfigurationsinformationen zu erhalten; und
ein Sendemodul (603), das dazu konfiguriert ist, die Messdaten an eine Netzwerkvorrichtung zu senden;
wobei die Messkonfigurationsinformationen eine Messkategorie umfassen und die Messkategorie mindestens eines oder mehrere von einer durchschnittlichen Paketverzögerung, einer Paketverlustrate, einem Durchsatz, einem Datenvolumen oder Blockierungszeiten umfasst;
wobei das Erfassungsmodul (601) insbesondere zu Folgendem konfiguriert ist:
für jede der unterschiedlichen Messkategorien, Messen des Zieldienstes bzw. Erhalten der Messdaten des Zieldienstes, die der Messkategorie entsprechen;
wobei das Verarbeitungsmodul (602) ferner zu Folgendem konfiguriert ist:
Speichern der Messdaten, während die Messdaten erhalten werden;
**dadurch gekennzeichnet, dass**
wobei das Verarbeitungsmodul (602) insbesondere zu Folgendem konfiguriert ist:
Feststellen, ob die Messdaten eine voreingestellte Bedingung erfüllen, wobei die voreingestellten Bedingungen, die den unterschiedlichen Messkategorien entsprechen, unterschiedlich sind; und
Speichern der Messdaten, wenn festgestellt wird, dass die voreingestellte Bedingung erfüllt ist.

5. Datenverarbeitungsgerät (600) nach Anspruch 4,
wobei die Messkonfigurationsinformationen eine Meldungszeit umfassen und die Meldungszeit einen Meldungszeitraum oder einen Meldungszeitpunkt umfasst;
das Sendemodul (603) ist insbesondere zu Folgendem konfiguriert:
periodisches Senden der Messdaten gemäß dem Meldungszeitraum an die Netzwerkvorrichtung;
oder Senden der Messdaten an die Netzwerkvorrichtung, wenn der Meldungszeitpunkt erreicht ist.

6. Datenverarbeitungsgerät (600) nach Anspruch 4 oder 5,
wobei das Sendemodul (603) insbesondere zu Folgendem konfiguriert ist:
Senden einer Anforderung zur Meldung von Messdaten an die Netzwerkvorrichtung; und
Senden der Messdaten an die Netzwerkvorrichtung, wenn eine Meldung zulassende Antwortinformation, die von der Netzwerkvorrichtung zurückgegeben wird, empfangen wird.

7. Datenverarbeitungsgerät (600) nach Anspruch 4 oder 5,
wobei das Sendemodul (603) insbesondere zu Folgendem konfiguriert ist:
Senden der Messdaten und der Messkonfigurationsinformationen an die Netzwerkvorrichtung.

8. Datenverarbeitungsgerät (600) nach Anspruch 4 oder 5,
wobei das Sendemodul (603) insbesondere zu Folgendem konfiguriert ist:
Senden von Referenzinformationen des Zieldienstes an die Netzwerkvorrichtung;
wobei die Referenzinformationen mindestens eine oder mehrere von Identifikationsinformationen einer Zelle, in der sich die Endgerätevorrichtung befindet, Identifikationsinformationen einer benachbarten Zelle einer Zelle, in der sich die Endgerätevorrichtung befindet, geografischen Standortinformationen der Endgerätevorrichtung, Signalstärke einer Zelle, in der sich die Endgerätevorrichtung befindet, Signalstärke einer benachbarten Zelle einer Zelle, in der sich die Endgerätevorrichtung befindet, Signalqualität einer Zelle, in der sich die Endgerätevorrichtung befindet, und Signalqualität einer benachbarten Zelle einer Zelle, in der sich das Endgerät befindet, umfassen.

9. Prozessorlesbares Speichermedium, das ein Computerprogramm speichert, das Anweisungen umfasst, die, wenn sie von einem Prozessor eines Verarbeitungsgeräts für eine Endgerätevorrichtung ausgeführt werden, die Endgerätevorrichtung veranlassen, das Datenverarbeitungsverfahren nach einem der Ansprüche 1 bis 3 auszuführen.

## Revendications

1. Procédé de traitement de données, réalisé par un dispositif terminal, le procédé comprenant :
l'acquisition (S202) d'informations de configuration de mesure pour l'indication de réaliser une mesure de couche 2 et d'informations d'identification d'un service cible ;
l'obtention de données de mesure du service cible selon les informations de configuration de mesure ; et
l'envoi (S203) des données de mesure à un dispositif réseau ;
dans lequel les informations de configuration de mesure comprennent une catégorie de mesure, et la catégorie de mesure comprend au moins l'un ou plusieurs parmi : un retard de paquet moyen, un taux de perte de paquets, un débit, un volume de données ou des temps de blocage ;
l'obtention des données de mesure du service cible selon les informations de configuration de mesure comprend spécifiquement :
pour chacune parmi différentes catégories de mesure, la mesure (S302) du service cible de manière respective, et l'obtention (S302) des données de mesure du service cible correspondant à la catégorie de mesure ;
dans lequel le procédé de traitement de données comprend en outre :
le stockage (S303) des données de mesure pendant que les données de mesure sont obtenues ;
**caractérisé en ce que**,
le stockage (S303) des données de mesure comprend spécifiquement :
la détermination (S3031) quant à savoir si les données de mesure satisfont à une condition prédéfinie, dans lequel les conditions prédéfinies correspondant aux différentes catégories de mesure sont différentes ; et
le stockage (S3032) des données de mesure s'il est déterminé que la condition prédéfinie est satisfaite.

2. Procédé de traitement de données selon la revendication 1, dans lequel les informations de configuration de mesure comprennent un temps de mesure, et le temps de mesure comprend une période de mesure ou un instant de mesure ;
l'obtention des données de mesure du service cible selon les informations de configuration de mesure comprend spécifiquement :
la mesure du service cible de manière périodique selon la période de mesure, et
l'obtention des données de mesure du service cible acquises au sein de la période de mesure ;
ou la mesure du service cible lorsque l'instant de mesure est atteint, et l'obtention des données de mesure du service cible mesurées à l'instant de mesure.

3. Procédé de traitement de données selon l'une quelconque des revendications 1 à 2, dans lequel le procédé de traitement de données comprend en outre :
l'envoi (S504) d'informations de référence du service cible au dispositif réseau ;
dans lequel les informations de référence comprennent au moins l'une ou plusieurs parmi des informations d'identification d'une cellule où le dispositif terminal est situé, des informations d'identification d'une cellule adjacente d'une cellule où le dispositif terminal est situé, des informations d'emplacement géographique du dispositif terminal, une intensité de signal d'une cellule où le dispositif terminal est situé, une intensité de signal d'une cellule adjacente d'une cellule où le dispositif terminal est situé, une qualité de signal d'une cellule où le dispositif terminal est situé, ou une qualité de signal d'une cellule adjacente d'une cellule où le terminal est situé.

4. Appareil de traitement de données (600), pour un dispositif terminal, l'appareil comprenant :
un module d'acquisition (601), configuré pour acquérir des informations de configuration de mesure pour l'indication de réaliser une mesure de couche 2 et des informations d'identification d'un service cible ;
un module de traitement (602), configuré pour obtenir des données de mesure du service cible selon les informations de configuration de mesure ; et
un module d'envoi (603), configuré pour envoyer les données de mesure à un dispositif réseau ;
dans lequel les informations de configuration de mesure comprennent une catégorie de mesure, et la catégorie de mesure comprend au moins l'un ou plusieurs parmi un retard de paquet moyen, un taux de perte de paquets, un débit, un volume de données ou des temps de blocage ;
dans lequel le module d'acquisition (601) est spécifiquement configuré pour :
pour chacune parmi différentes catégories de mesure, mesurer le service cible de manière respective, et obtenir les données de mesure du service cible correspondant à la catégorie de mesure ;
dans lequel le module de traitement (602) est en outre configuré pour :
stocker les données de mesure pendant que les données de mesure sont obtenues ;
**caractérisé en ce que**,
le module de traitement (602) est spécifiquement configuré pour :
déterminer si les données de mesure satisfont à une condition prédéfinie, dans lequel les conditions prédéfinies correspondant aux différentes catégories de mesure sont différentes ; et
stocker les données de mesure s'il est déterminé que la condition prédéfinie est satisfaite.

5. Appareil de traitement de données (600) selon la revendication 4,
dans lequel les informations de configuration de mesure comprennent un temps de rapport, et le temps de rapport comprend une période de rapport ou un instant de rapport ;
le module d'envoi (603) est spécifiquement configuré pour :
envoyer les données de mesure au dispositif réseau de manière périodique selon la période de rapport ;
ou envoyer les données de mesure au dispositif réseau lorsque l'instant de rapport est atteint.

6. Appareil de traitement de données (600) selon la revendication 4 ou 5,
dans lequel le module d'envoi (603) est spécifiquement configuré pour :
envoyer une requête de rapport de données de mesure au dispositif réseau ; et
envoyer les données de mesure au dispositif réseau si des informations de réponse d'autorisation de rapport renvoyées par le dispositif réseau sont reçues.

7. Appareil de traitement de données (600) selon la revendication 4 ou 5,
dans lequel le module d'envoi (603) est spécifiquement configuré pour :
envoyer les données de mesure et les informations de configuration de mesure au dispositif réseau.

8. Appareil de traitement de données (600) selon la revendication 4 ou 5,
dans lequel le module d'envoi (603) est spécifiquement configuré pour :
envoyer des informations de référence du service cible au dispositif réseau ;
dans lequel les informations de référence comprennent au moins l'une ou plusieurs parmi des informations d'identification d'une cellule où le dispositif terminal est situé, des informations d'identification d'une cellule adjacente d'une cellule où le dispositif terminal est situé, des informations d'emplacement géographique du dispositif terminal, une intensité de signal d'une cellule où le dispositif terminal est situé, une intensité de signal d'une cellule adjacente d'une cellule où le dispositif terminal est situé, une qualité de signal d'une cellule où le dispositif terminal est situé, et une qualité de signal d'une cellule adjacente d'une cellule où le terminal est situé.

9. Support de stockage lisible par processeur, stockant un programme d'ordinateur comprenant des instructions qui, lorsqu'elles sont exécutées par un processeur d'un appareil de traitement pour un dispositif terminal, amènent le dispositif terminal à exécuter le procédé de traitement de données selon l'une quelconque des revendications 1 à 3.
